# EUROPÄISCHE PATENTANMELDUNG

(11) **EP 3 037 691 A1**
(43) Veröffentlichungstag der Anmeldung: **29.06.2016**
(21) Anmeldenummer: 15020247.1
(22) Anmeldetag: 10.12.2015
(51) Int. Cl.: F16D 66/02, F16D 55/224

(54) **VORRICHTUNG ZUR ANZEIGE DES VERSCHLEISSENS VON BREMSBELÄGEN EINER SCHEIBENBREMSE**

(30) Priorität: 22.12.2014 DE 102014018938
(71) Anmelder: WBN Waggonbau Niesky GmbH, 02906 Niesky (DE)
(72) Erfinder: Göhring, Dieter, 02906 Waldhufen (DE); Kappler, Detlef, 02906 Niesky (DE); Petrick, Christian, 02906 Mücka (DE)

(57) **Zusammenfassung**

Eine Vorrichtung zur Anzeige des Verschleißes von Bremsbelägen (16, 26) einer Scheibenbremse, bei der eine Mehrzahl von Bremsbelägen (16, 26) mittels zweier um je einen Drehpunkt (13, 23) beweglich gelagerter Bremshebel (10, 20) gegen eine Bremsscheibe (6) anstellbar ist. Die Vorrichtung umfasst mindestens ein Mittel (1, 2, 11, 12, 21, 22) zum Erfassen einer Lageveränderung der beiden Bremshebel (10, 20) zueinander zwischen einer ersten Ruheposition und einer zweiten gegen die Bremsscheibe (6) angestellten Bremsposition.

## Beschreibung

Die Erfindung betrifft eine Vorrichtung zur Anzeige des Verschleißes von Bremsbelägen einer Scheibenbremse, bei der eine Mehrzahl von Bremsbelägen mittels zweier um je einen Drehpunkt beweglich gelagerter Bremshebel gegen eine Bremsscheibe anstellbar ist.

Derartige Vorrichtungen dienen dazu, dem Wartungspersonal ein rechtzeitiges Erkennen des Erreichens der Verschleißgrenze eines Bremsbelages zu ermöglichen. Die wesentliche Zielstellung besteht darin, den Austausch verschlissener Bremsbeläge im Sinne einer zustands- bzw. bedarfsorientierten Wartung zu ermöglichen. Im Gegensatz zur zeit- bzw. intervallorientierten Instandhaltung werden dabei nur diejenigen Bremsbeläge ausgetauscht, die das Verschleißgrenzmaß entweder schon erreicht haben, oder für die deren baldiges Erreichen prognostiziert werden kann. Die im Rahmen von zeit- bzw. intervallorientierten Wartungskonzepten erforderlichen zyklischen Belagverschleißprüfungen sollen auf diese Weise wirksam vermieden werden.

Aus dem Stand der Technik sind hierzu bereits verschiedene technische Ansätze bekannt. DE 100 29 238 A1 offenbart einen im Bremsbelag integrierten, elektrisch leitenden Verschleißsensor, der bei Erreichen des kritischen Verschleißmaßes freigelegt wird. Dabei kommt eine elektrisch leitende Kontaktstelle mit der Bremsscheibe in Berührung, wodurch ein elektrischer Kurzschluss hervorgerufen oder eine elektrische Kontaktdrahtschleife unterbrochen wird. Die hierdurch hervorgerufene elektrische Zustandsänderung wird dem Wartungspersonal signalisiert.

Desweiteren sind auch optoelektronische Systeme zur Überprüfung des Verschleißes von Bremsbelägen bekannt. Beispielsweise offenbart die DD 222 383 A1 eine Vorrichtung, bei der eine Lichtstrahlung auf die verschleißende Schicht eines Bremsbelages gerichtet ist und aus Veränderungen im Reflexionsverhalten des Bremsbelages auf dessen Zustand und insbesondere auf das Erreichen eines Verschleißgrenzmaßes geschlossen wird.

Problematisch ist bei diesen vorgenannten Lösungsansätzen aber nicht nur die Verschmutzungsanfälligkeit der Kontakte bzw. der optoelektronischen Bauteile durch Staub und Bremsabrieb, sondern vor allem auch die bei schienengebundenen Güterwagen in den meisten Fällen fehlende Stromquelle. Somit sind Lösungsansätze, die auf dem Einsatz von elektrischem Strom basieren, für die Verwendung in Güterwagen grundsätzlich ausgeschlossen.

Als Alternative zu derartigen elektrischen Vorrichtungen schlägt DE 2 357 207 A1 ein Druckluftsystem vor, welches eine Mehrzahl von Tastventilen aufweist, wobei die Bremsbeläge einer Scheibenbremse jeweils einem Tastventil zugeordnet sind. Jedes Tastventil ist durch mindestens einen mit jeweils einem Bremsbelag gekoppelten Hebel betätigbar. Sobald ein unteres Verschleißgrenzmaß des Bremsbelages erreicht ist, berührt der mit dem jeweiligen Bremsbelag gekoppelte Hebel das Tastventil. Im Gegensatz dazu liegt das Tastventil bei ausreichender Belagdicke außerhalb des Einwirkungsbereiches dieses Hebelarms und der Luftdurchgang des Tastventils ist geschlossen. Wird die zugehörige Druckluftleitung zum Zwecke der Kontrolle der Bremsbeläge mit Luft befüllt, so erfolgt an einem solchen geschlossenen Tastventil ein Druckanstieg, der auf eine ebenfalls mit der Druckluftleitung verbundene Kontrollanzeige einwirkt und dort eine Zustandsmeldung im Sinne von "Belag in Ordnung" oder "Verschleißgrenze noch nicht erreicht" auslöst. Bei Unterschreiten des Verschleißgrenzmaßes wird hingegen das Tastventil geöffnet und die in der Druckluftleitung befindliche Luft entströmt. Hierdurch wird die Kontrollanzeige in einen Zustand überführt, der dem Wartungspersonal einen abgenutzten Bremsbelag signalisiert. Eine solche druckluftbasierte Verschleiß-Anzeigevorrichtung ist jedoch konstruktiv aufwändig und verteuert sowohl die Herstellung als auch den Betrieb des Schienenfahrzeuges. Zudem ist die Überprüfung des Verschleißzustandes der Bremsbeläge mittels einer solchen Vorrichtung nur nach Einleitung einer Aktivierungshandlung (nämlich dem Befüllen des Druckluftsystems) durch das Wartungspersonal möglich und setzt eine aktive Druckluftversorgung voraus.

Eine hierzu alternative pneumomechanische Ausführung ist aus der DD 259 546 A3 bekannt. Gemäß dieser technischen Lehre ermittelt ein pneumatisch geführter Abtast-Stößel den verschleißabhängigen Abstand zwischen Bremsscheibe und Bremsbelaghalter. Zum Überprüfen des Verschleißzustandes wird dieser Taststößel mittels Druckluft gegen die Bremsscheibe bewegt. Der dabei vom Taststößel zurückgelegte Weg wird hinsichtlich der noch verbleibenden Verschleißreserve ausgewertet. Nachteilig hieran ist, dass eine solche Vorrichtung nur bei Stillstand der Bremsscheibe und damit bei Stillstand des zugehörigen Fahrzeuges benutzbar ist. Das Absenken des Abtast-Stößels gegen die Oberfläche einer rotierenden Bremsscheibe könnte deren Oberfläche beschädigen.

Es ist allen vorbekannten Lösungsansätzen gemeinsam, dass der Austausch von Bremsbelägen mit hohem Aufwand und nennenswerten zusätzlichen Kosten verbunden ist. Entweder sind die Bremsbeläge an sich aufwändig und teuer gefertigt, sofern sie innenliegende Bauteile aufweisen, die bei Erreichen des unteren Verschleißgrenzmaßes freigelegt werden und bestimmte Warnmechanismen auslösen sollen, oder es sind beim Bremsbelagtausch aufwändige Anpassungs- und Justagetätigkeiten erforderlich, wenn z.B. ein pneumatischer Taststößel auf die geänderte Dicke eines Bremsbelages angepasst werden soll oder ein optoelektronisches System auf das veränderte Reflexionsverhalten eines ausgetauschten Bremsbelages angepasst werden muss.

Die Aufgabe der vorliegenden Erfindung besteht somit darin, eine gattungsgemäße Vorrichtung zur Anzeige des Verschleißes von Bremsbelägen einer Scheibenbremse bereitzustellen, die den mit dem Wechsel eines Bremsbelages verbundenen Aufwand reduzieren soll.

Dies wird erfindungsgemäß dadurch erreicht, dass die Vorrichtung mindestens ein Mittel zum Erfassen einer Lageveränderung der beiden Bremshebel zueinander zwischen einer ersten Ruheposition und einer zweiten gegen die Bremsscheibe angestellten Bremsposition umfasst. Eine solche Vorrichtung benötigt keinerlei Modifikationen an den auszutauschenden Verschleißteilen (im Gegensatz zu beispielsweise solchen Systemen, bei denen elektrische Bauteile in die Bremsscheiben integriert werden müssen). Es sind weiterhin die herkömmlichen Bremsbeläge nutzbar. Dies ist sehr kostengünstig. Des Weiteren kommt die Vorrichtung auch ohne Einbauten im näheren räumlichen Umfeld der Bremsbeläge aus Die Bremsbeläge bleiben beim Auswechseln ohne jegliche Einschränkungen für das Wartungspersonal zugänglich. Abgesehen vom eigentlichen Belagtausch an sich müssen keinerlei weiteren (De-)Montagen und nachfolgenden (Neu-)Einstellungen vorgenommen werden. Die erfindungsgemäße Vorrichtung ist nach einem Belagwechsel sofort wieder einsatzbereit.

Die Erfindung sieht ferner vor, dass das mindestens eine Mittel zum Erfassen einer Lageveränderung der beiden Bremshebel zueinander zum Erfassen einer Abstandsänderung zwischen einem ersten und einem zweiten Anschlusspunkt ausgelegt ist, wobei jedem der beiden Bremshebel jeweils ein Anschlusspunkt zugeordnet ist und die Anschlusspunkte in jeweils demselben Abstand zum Drehpunkt des jeweiligen Bremshebels angeordnet sind. Dieses Abstandsmaß zum Drehpunkt definiert eine Über- oder Untersetzung der Lageveränderung beider Bremshebel zueinander in Bezug auf die verschleißbedingte Zunahme des Anstellweges der Bremsbeläge gegen die Bremsscheibe zwischen der Ruheposition und der Bremsposition. Dies bedeutet, dass eine erfindungsgemäße Vorrichtung in besonders einfacher Weise auf unterschiedliche Arten von Bremsbeläge anpassbar ist. So haben beispielsweise Bremsbeläge, die aus gering verschleißenden Reibmaterialien aufgebaut sind und / oder große Reibflächen aufweisen, oftmals deutlich dünnere Verschleißschichten und damit eine geringere verschleißbedingte Zunahme der Hebelwege beim Anlegen der Bremse als solche Bremsbeläge, die aus stark verschleißenden Reibmaterialien aufgebaut sind und / oder kleine Reibkontaktflächen aufweisen. Durch entsprechende Wahl des Abstandsmaßes zum Drehpunkt kann eine erfindungsgemäße Vorrichtung in einfacher Weise auf derart unterschiedliche Bremsbeläge angepasst werden, so dass insbesondere auch bei Bremsbelägen mit nur geringer verschleißbedingter Zunahme des Hebelweges eine eindeutige Anzeige über den Verschleißzustand bzw. -vorrat der Bremsbeläge möglich ist.
Die Identität der Abstandsmaße zu den Drehpunkten an beiden Bremshebeln erleichtert die Justage und Einstellung der gesamten Vorrichtung, da auf diese Weise gewährleistet ist, dass der Verschleiß der den beiden Bremshebeln zugeordneten Bremsbeläge im gleichen Verhältnis zueinander berücksichtigt wird.

Gemäß einer ersten Ausgestaltungsvariante der Erfindung ist jeder Anschlusspunkt vom jeweiligen Drehpunkt aus gesehen in Richtung auf eine Anlenkung des Bremshebels an einem Bremsbetätigungsorgan ausgerichtet. Eine solche Ausführung ermöglicht eine indirekte Signalaufnahme; d.h. eine Anstellbewegung der Bremshebel gegen die Bremsscheiben (= Bremsbetätigung) führt zu einer Vergrößerung des Abstandes zwischen dem ersten und dem zweiten Anschlusspunkt.

Alternativ hierzu kann aber auch jeder Anschlusspunkt vom jeweiligen Drehpunkt aus gesehen in Richtung auf einen Befestigungsort eines Bremsbelaghalters am Bremshebel ausgerichtet sein, was eine direkte Signalaufnahme ermöglicht; d.h. eine Anstellbewegung der Bremshebel gegen die Bremsscheiben (= Bremsbetätigung) führt zu einer Verringerung des Abstandes zwischen dem ersten und dem zweiten Anschlusspunkt.

Eine sinnvolle Weiterentwicklung des erfinderischen Grundkonzepts sieht vor, dass jeder Anschlusspunkt auf jeweils einer Adapterklemme angeordnet ist, welche verdrehfest mit dem jeweiligen Bremshebel in dessen Drehpunkt verbunden ist. Eine solche Anordnung der Anschlusspunkte auf einem eigenständigen Bauteil (= der Adapterklemme) ermöglicht die Umsetzung des erfinderischen Grundkonzeptes, ohne dabei die Bauteile der Scheibenbremse in irgendeiner Weise gegenüber ihrer ursprünglichen Form und Ausgestaltung abändern zu müssen. Insbesondere wird dadurch vermieden, die Anschlusspunkte durch Schweißen oder ähnliche Bearbeitungsschritte auf den Bremshebeln aufbringen zu müssen. Derartige Maßnahmen könnten negative Auswirkungen auf die Betriebsfestigkeit der Bremshebel haben. Dies ist insbesondere dann von Relevanz, wenn bereits existierende bzw. zugelassene BremsenTypen durch Um- oder Nachrüstungsmaßnahmen mit erfindungsgemäßen Vorrichtungen ausgerüstet werden sollen. Eventuelle zulassungsrechtliche Implikationen durch die Ergänzung vorhandener Bremsentypen mit erfindungsgemäßen Vorrichtungen zur Verschleißanzeige werden auf diese Weise minimalisiert oder sogar ganz vermieden.
Eine solche verdrehfeste Verbindung zwischen Adapterklemme und Bremshebel kann beispielsweise durch Aufschrumpfen oder Aufstecken beider Bauteile auf denselben Gelenkbolzen realisiert werden, mittels dem auch der Bremshebel gelenkig in Bezug zum Grundrahmen der Bremszange gelagert ist. Die Adapterklemme ist dabei in Bezug auf die Längsachse des Gelenkbolzens nur um ein solches Maß axial zum Bremshebel beabstandet, dass die auf den Gelenkbolzen aufgebrachte Adapterklamme flächig auf den Bremshebel aufliegt. Da zwischen Adapterklemme und Bremshebel keine Relativbewegung stattfindet, können beide in flächigem Kontakt zueinander stehen.

Zur Erhöhung der Verdrehfestigkeit der Adapterklemme in Bezug auf den Bremshebel kann die Adapterklemme im Bereich des ersten bzw. zweiten Anschlusspunktes noch zusätzlich eine mit der Außenkontur des zugehörigen Bremshebels übereinstimmende Formgebung mit in etwa rechtwinklig in Richtung zum Bremshebel hin abgekanteten Rändern ("Ohren") aufweisen, so dass der Bremshebel formschlüssig zwischen den abgekanteten Rändern der Adapterklemme geführt ist und eine zusätzliche Koppelstelle zwischen Bremshebel und Adapterklemme geschaffen wird.

Gemäß einer besonders bevorzugten Ausführungsform der Erfindung ist das mindestens eine Mittel zum Erfassen einer Lageveränderung der beiden Bremshebel zueinander als ein Bowdenzug ausgeführt, dessen Zugseil im ersten Anschlusspunkt kraftschlüssig mit dem ersten Bremshebel verbunden ist und dessen Zuggegenhalter im zweiten Anschlusspunkt kraftschlüssig mit dem zweiten Bremshebel verbunden ist. Auf diese Weise wird eine rein mechanische Lösung verwirklicht, die ohne Zufuhr von elektrischer oder pneumatischer Energie funktionsfähig ist. Zudem ist eine solche Vorrichtung kostengünstig in Herstellung und laufender Wartung.

Des Weiteren umfasst eine erfindungsgemäße Vorrichtung mindestens ein Mittel zum Übertragen der Lageveränderung der beiden Bremshebel zueinander an ein räumlich entferntes Anzeigeelement. Auf diese Weise ist die Beobachtung des Verschleißzustandes der Bremsbeläge durch das Wartungspersonal von einer Position außerhalb des unmittelbaren Gefahrenbereiches des Schienenfahrzeuges möglich. Da die Bremsscheibe nahezu immer durch die zugehörigen Räder des Schienenfahrzeuges verdeckt wird, müsste andernfalls die Wartung von einem Grubengleis aus erfolgen, was betrieblich äußerst aufwändig ist.

Dabei kann das Anzeigeelement entweder einen drehbar gelagerten Zeiger, der durch eine Drehfeder unterstützt wird, oder einen linear entlang einer Messskala verschiebbar gelagerten und durch Zug- oder Druckfedern unterstützten Zeiger umfassen. Unter einer Messskala ist in diesem Sinne auch eine solche Anzeige zu verstehen, die auf die Angabe konkreter Zahlenwerte verzichtet und stattdessen die verbliebene Abnutzungsreserve eines Bremsbelages mittels eines Farb- oder Symbolcodes angibt (z.B. durch Anzeige eines grünen Farbelementes, falls die Stärke eines Bremsbelages das untere Verschleißgrenzmaß noch nicht erreicht hat).

Die vorliegende Erfindung bezieht sich nicht nur auf eine Vorrichtung zur Anzeige des Verschleißes von Bremsbelägen einer Scheibenbremse mit den oben erläuterten Merkmalen, sondern auch auf eine mit einer derartigen Vorrichtung ausgerüstete Scheibenbremsvorrichtung für Schienenfahrzeuge sowie ein mit einer derartigen Vorrichtung ausgerüstetes Schienenfahrzeug.

Die vorliegende Erfindung wird nachfolgend anhand eines Ausführungsbeispieles und dazugehöriger Zeichnungen näher erläutert. Es zeigen
Figur 1: die erfindungsgemäße Vorrichtung in Draufsicht

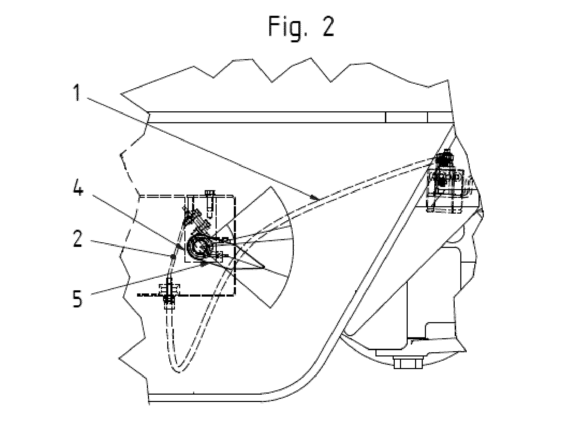

Figur 2: die erfindungsgemäße Vorrichtung in seitlicher Ansicht

Die erfindungsgemäße Vorrichtung ist in einem Drehgestell eines Güterwagens für den Schienenverkehr mit scheibengebremsten Radsätzen eingebaut. Der (hier nicht dargestellte) Radsatz verfügt über mindestens eine Bremsscheibe (6), welche in an sich bekannter Weise mittels einer herkömmlichen druckluftbetätigten Scheibenbremse gebremst wird. Eine solche Bremse verfügt über einen Bremszylinder (3) sowie über zwei Bremshebel (10, 20), deren jeweils erstes Ende über eine Anlenkung (14, 24) mit dem Betätigungskolben des Bremszylinders in Verbindung steht, und an deren jeweils zweitem Ende ein Bremsbelaghalter (15, 25) gelenkig befestigt ist. Jeder Bremsbelaghalter (15, 25) trägt jeweils einen Bremsbelag (16, 26). Beide Bremshebel (10, 20) sind in jeweils einem zwischen ihrem ersten und zweiten Ende in etwa mittig angeordneten Drehpunkt (13, 23) gelenkig gelagert. Beide Drehgelenke sind durch ein starres Koppelbauteil, dem Grundrahmen der Bremszange, miteinander verbunden. Beim Betätigen des Bremszylinders (3) führen die beiden Bremshebel (10, 20) jeweils zueinander gegensinnige Drehbewegungen um ihre Drehpunkte (13, 23) durch, was zu einem Anpressen der Bremsbeläge (16, 26) gegen die beidseitigen Reiboberflächen der Bremsscheibe (6) führt.

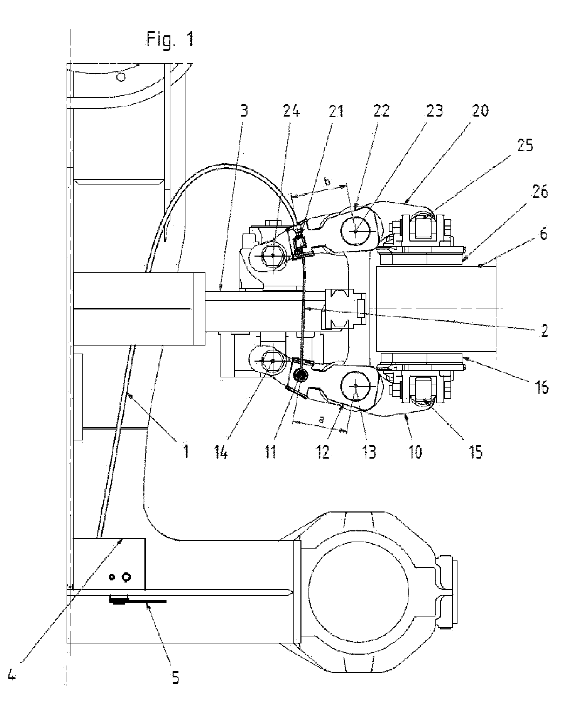

Erfindungsgemäß sind die Gelenkbolzen in den Drehpunkten (13, 23) beider Bremshebel (10, 20) jeweils axial verlängert, so dass jeder von diesen eine zusätzliche Adapterplatte (12, 22) aufnehmen kann. Beide Adapterplatten (12, 22) sind mittels Presssitz oder Verschraubung verdrehfest mit dem Gelenkbolzen verbunden. Jede Adapterplatte (12, 22) weist eine längliche Verlängerungslasche auf, deren Außenkontur im Wesentlichen der Außenkontur eines Bremshebels (10, 20) entspricht. Des Weiteren ist jede Adapterplatte (12, 22) derart in Bezug auf den jeweils zugeordneten Bremshebel (10, 20) ausgerichtet, dass ihre Verlängerungslasche in Richtung auf die Anlenkung (14, 24) des Bremshebels (10, 20) am Bremszylinder (3) ausgerichtet ist. Zusätzlich weisen die Verlängerungslaschen der Adapterplatten (12, 22) entlang ihrer Außenkontur einen um circa 90° nach unten (in Blickrichtung gemäß Figur 1) abgekanteten Rand auf. Die abgekanteten Ränder sind hinreichend lang ausgeführt, so dass sie auch die Außenränder der darunterliegenden Bremshebel überdecken und auf diese Weise eine zusätzliche Zwangskopplung zwischen Bremshebel (10, 20) und Adapterplatte (12, 22) bewirken, wodurch eine zusätzliche Sicherheit gegen unbeabsichtigtes Verdrehen der Adapterplatten in Bezug auf die Bremshebel erreicht wird. Auf beiden Adapterplatten (12, 22) ist jeweils ein Anschlusspunkt (11, 21) aufgebracht, wobei beide Anschlusspunkte (11, 21) identische Abstände (a, b) zu den Drehpunkten (13, 23) aufweisen.

Die erfindungsgemäße Vorrichtung weist des Weiteren einen Bowdenzug (1) auf, dessen Zugseil (2) in einem ersten Anschlusspunkt (11) kraftschlüssig mit der ersten Adapterplatte (12) verbunden ist, und dessen Zuggegenhalter in einem zweiten Anschlusspunkt (21) kraftschlüssig mit der zweiten Adapterplatte (22) verbunden ist. Durch die verdrehfeste Klemmung bzw. Verschraubung beider Adapterplatten (12, 22) mit den jeweiligen Gelenkbolzen ist auch eine kraftschlüssige Verbindung des Zugseils (2) des Bowdenzugs (1) mit dem ersten Bremshebel (10) sowie eine kraftschlüssige Verbindung des Zuggegenhalters des Bowdenzuges (1) mit dem zweiten Bremshebel (20) realisiert. Der Bowdenzug ist an seinem zweiten, von der Scheibenbremse entfernten Ende mit dem Getriebe (4) eines Anzeigeelementes (5) verbunden. Das Anzeigeelement ist an einer durch das Wartungspersonal gut einsehbaren Stelle (z.B auf der außenliegenden Seitenfläche eines Tragrahmens) platziert und umfasst einen drehbar gelagerten Zeiger. Die Drehbewegung des Zeigers wird durch eine Drehfeder unterstützt.

Sobald nun die Scheibenbremse durch Betätigung des Bremszylinders (3) in einen aktiven, die Bremsscheibe (6) abbremsenden Zustand überführt wird, verändern die beiden Bremshebel (10, 20) ihre relative Lage zueinander (gemäß der Darstellung in Figur 1 führt der erste Bremshebel (10) eine Drehbewegung um den Drehpunkt (13) im Gegenuhrzeigersinn durch, während der zweite Bremshebel (20) eine Drehbewegung um den Drehpunkt (23) im Uhrzeigersinn ausführt). Somit vergrößert sich dabei auch der Abstand der beiden Anschlusspunkte (11, 21) auf den beiden Adapterplatten (12, 22) zueinander. Dadurch entfernt sich auch der Zuggegenhalter des Bowdenzuges (1) vom ersten Anschlusspunkt (11), in dem das Zugseil (2) des Bowdenzuges (1) fixiert ist. Der Bowdenzug (1) überträgt nunmehr eine Zugkraft auf das Getriebe (4) der Anzeigevorrichtung. Diese Zugkraft ist proportional zum Drehwinkel, den die beiden Bremshebel (10, 20) im Zuge der Anstellbewegung der Bremsbeläge (16, 26) um die Drehpunkte (13, 23) gegen die Bremsscheibe (6) ausführen. Durch entsprechende Auswahl und Festlegung der Abstände (a, b) zwischen den Anschlusspunkten (11, 21) und den Drehpunkten (13, 23) kann dabei auch die Größe der vom Bowdenzug (1) zu übertragenden Zugkraft eingestellt werden, und damit auch - in Abhängigkeit von der Federkonstante der im Getriebe (4) verbauten Drehfeder - die konkrete Auslenkung des Zeigers auf einer Messskala der Anzeigeelementes (5) beeinflusst werden. Somit können auch kleine Drehbewegungen der Bremshebel (10, 20) in hinreichend große und für das Wartungspersonal leicht erkennbare bzw. ablesbare Zeiger-Auslenkungen übersetzt werden. Die Vorrichtung ist dabei so eingestellt, dass bei Erreichen des Verschleißgrenzmaßes an einem der beiden Bremsbeläge (16, 26) der Zeiger eines zugehörigen Anzeigeelementes (5) in einen farblich deutlich (z.B. durch Verwendung der Farbe "rot") markierten Bereich der Messskala ausgelenkt wird und dieser Verschleißzustand für das Wartungspersonal sofort klar erkennbar ist.

### Bezugszeichenliste

- (1): Bowdenzug
- (2): Zugseil
- (3): Bremsbetätigungsorgan
- (4): Getriebe
- (5): Anzeigeelement
- (6): Bremsscheibe
- (10): erster Bremshebel
- (11): erster Anschlusspunkt
- (12): Adapterklemme des ersten Bremshebels
- (13): Drehpunkt des ersten Bremshebels
- (14): Anlenkung des ersten Bremshebels am Bremszylinder
- (15): Bremsbelaghalter des ersten Bremshebels
- (16): erster Bremsbelag
- (20): zweiter Bremshebel
- (21): zweiter Anschlusspunkt
- (22): Adapterklemme des zweiten Bremshebels
- (23): Drehpunkt des zweiten Bremshebels
- (24): Anlenkung des zweiten Bremshebels am Bremszylinder
- (25): Bremsbelaghalter des zweiten Bremshebels
- (26): zweiter Bremsbelag
- (a): Abstand des ersten Anschlusspunktes zum Drehpunkt des ersten Bremshebels
- (b): Abstand des zweiten Anschlusspunktes zum Drehpunkt des zweiten Bremshebels

## Patentansprüche

1. Vorrichtung zur Anzeige des Verschleißes von Bremsbelägen (16, 26) einer Scheibenbremse, bei der eine Mehrzahl von Bremsbelägen (16, 26) mittels zweier um je einen Drehpunkt (13, 23) beweglich gelagerter Bremshebel (10, 20) gegen eine Bremsscheibe (6) anstellbar ist, **dadurch gekennzeichnet, dass**
die Vorrichtung mindestens ein Mittel (1,2, 11, 12, 21, 22) zum Erfassen einer Lageveränderung der beiden Bremshebel (10, 20) zueinander zwischen einer ersten Ruheposition und einer zweiten gegen die Bremsscheibe (6) angestellten Bremsposition umfasst.

2. Vorrichtung zur Anzeige des Verschleißes von Bremsbelägen (16, 26) einer Scheibenbremse nach Patentanspruch 1, **dadurch gekennzeichnet, dass** das mindestens eine Mittel zum Erfassen einer Lageveränderung der beiden Bremshebel (10, 20) zueinander zum Erfassen einer Abstandsänderung zwischen einem ersten und einem zweiten Anschlusspunkt (11, 21) ausgelegt ist, wobei jedem der beiden Bremshebel (10, 20) jeweils ein Anschlusspunkt (11, 21) zugeordnet ist und die Anschlusspunkte (11, 21) in jeweils demselben Abstand (a, b) zum Drehpunkt (13, 23) des jeweiligen Bremshebels (10, 20) angeordnet sind.

3. Vorrichtung zur Anzeige des Verschleißes von Bremsbelägen (16, 26) einer Scheibenbremse nach Patentanspruch 1 oder 2, **dadurch gekennzeichnet, dass** jeder Anschlusspunkt (11, 21) vom jeweiligen Drehpunkt (13, 23) aus gesehen in Richtung auf eine Anlenkung (14, 24) des Bremshebels (10, 20) an einem Bremsbetätigungsorgan (3) ausgerichtet ist.

4. Vorrichtung zur Anzeige des Verschleißes von Bremsbelägen (16, 26) einer Scheibenbremse nach Patentanspruch 1 oder 2, **dadurch gekennzeichnet, dass** jeder Anschlusspunkt (11, 21) vom jeweiligen Drehpunkt (13, 23) aus gesehen in Richtung auf einen Befestigungsort eines Bremsbelaghalters (15, 25) am Bremshebel (10, 20) ausgerichtet ist.

5. Vorrichtung zur Anzeige des Verschleißes von Bremsbelägen (16, 26) einer Scheibenbremse nach einem der Patentansprüche 1 bis 4, **dadurch gekennzeichnet, dass** jeder Anschlusspunkt (11, 21) auf jeweils einer Adapterklemme (12, 22) angeordnet ist, welche verdrehfest mit dem jeweiligen Bremshebel (10, 20) in dessen Drehpunkt (13, 23) verbunden ist.

6. Vorrichtung zur Anzeige des Verschleißes von Bremsbelägen (16, 26) einer Scheibenbremse nach einem der Patentansprüche 1 bis 5, **dadurch gekennzeichnet, dass** das mindestens eine Mittel zum Erfassen einer Lageveränderung der beiden Bremshebel (10, 20) zueinander als ein Bowdenzug (1) ausgeführt ist, dessen Zugseil (2) im ersten Anschlusspunkt (11) kraftschlüssig mit dem ersten Bremshebel (10) verbunden ist und dessen Zuggegenhalter im zweiten Anschlusspunkt (21) kraftschlüssig mit dem zweiten Bremshebel (20) verbunden ist.

7. Vorrichtung zur Anzeige des Verschleißes von Bremsbelägen (16, 26) einer Scheibenbremse nach einem der vorhergehenden Patentansprüche 1 bis 6, **dadurch gekennzeichnet, dass** die Vorrichtung mindestens ein Mittel zum Übertragen der Lageveränderung der beiden Bremshebel (10, 20) zueinander an ein räumlich entferntes Anzeigeelement (5) umfasst.

8. Vorrichtung zur Anzeige des Verschleißes von Bremsbelägen (16, 26) einer Scheibenbremse nach Patentanspruch 7 **dadurch gekennzeichnet, dass** das Anzeigeelement (5) einen drehbar gelagerten Zeiger oder einen linear entlang einer Messskala verschiebbar gelagerten Zeiger umfasst.

9. Scheibenbremsvorrichtung für Schienenfahrzeuge mit einer Vorrichtung zur Anzeige des Verschleißes von Bremsbelägen (16, 26) einer Scheibenbremse gemäß einem der vorhergehenden Patentansprüche 1 bis 8.

10. Schienenfahrzeug mit einer Vorrichtung zur Anzeige des Verschleißes von Bremsbelägen (16, 26) einer Scheibenbremse gemäß einem der vorhergehenden Patentansprüche 1 bis 8.
